# EUROPÄISCHE PATENTSCHRIFT

(11) **EP 4 098 987 B1**
(45) Veröffentlichungstag und Bekanntmachung des Hinweises auf die Patenterteilung: **18.10.2023**
(21) Anmeldenummer: 22174514.4
(22) Anmeldetag: 20.05.2022
(51) Int. Cl.: G01L 1/24, B61K 9/08, G01M 11/08, G01M 17/10

(54) **MESSRADSATZ**
MEASURING WHEEL SET
CADRE DE MESURE

(30) Priorität: 04.06.2021 DE 102021114425
(43) Veröffentlichungstag der Anmeldung: 07.12.2022
(73) Patentinhaber: Deutsche Bahn AG, 10785 Berlin (DE)
(72) Erfinder: Brodtka, Andreas, 31675 Bückeburg (DE); Ruberg, Lennart, 49082 Osnabrück (DE); Schwabe, Olaf, 32423 Minden (DE); Meyer, Philipp, 32469 Petershagen (DE)

(56) Entgegenhaltungen:
- DE-A1-102009 018 927
- KR-B1- 100 377 552
- US-A1- 2009 301 221

## Beschreibung

Die Erfindung betrifft einen Messradsatz, umfassend zwei mittels einer Radsatzwelle verbundene Räder, mindestens einen Lichtwellenleiter mit jeweils mindestens einem in dessen Faserkern eingeschriebenen optischen Filter, wobei der mindestens eine Lichtwellenleiter zur Verlegung auf einer Oberfläche mindestens eines Rades oder der Radsatzwelle eingerichtet ist, sowie mindestens eine Lichtquelle zur Einkopplung eines Lichtsignals in den mindestens einen Lichtwellenleiter.

Messradsätze sind aus dem Stand der Technik bekannt und dienen bevorzugt der Messung von zwischen den Rädern eines Schienenfahrzeuges und den Schienen, auf denen diese Räder abrollen, auftretenden Kräften bzw. Belastungszuständen. In hierzu analoger Weise sind solche Messradsätze auch für Messungen von bei ähnlichen Paarungen, wie z. B. zwischen den Rädern eines Schienenfahrzeuges und den Schienenrollen eines Rollenprüfstandes, auftretenden Kräften geeignet. Mittels solcher Messungen werden beispielweise die Auswirkungen unterschiedlicher Geschwindigkeiten, Achslasten oder Berührgeometrien im Kontaktbereich zwischen Rad und Schiene sowohl auf das jeweilige Rad des Messradsatzes bzw. Schienenfahrzeuges als auch auf die Schiene bzw. die zugehörige Gleisanlage untersucht. Zur messtechnischen Auswertung werden die Messsignale mittels Nahfeld-Telemetrie vom Messradsatz an einen räumlich vom Messradsatz beabstandeten Empfänger übertragen. Üblicherweise ist der Empfänger im Wagenkasten eines spurgebundenen Messfahrzeugs angeordnet, welches mittels des Messradsatzes oder einer Mehrzahl solcher Messradsätze rollfähig auf einem Schienengleis abgestützt ist. US 2009/0301221 A1 offenbart einen Messradsatz, dessen Sensoren mittels elektrischer Kabel an eine auf der rotierenden Radsatzwelle befestigte Signalauswertungseinrichtung angeschlossen sind. Elektrische Datenübertragungsmittel sind jedoch anfällig für Beeinträchtigungen oder Verfälschungen von Datensignalen durch die elektrischen Felder von Fahrmotoren elektrisch angetriebener Schienenfahrzeuge.

EP 2 246 681 A2 offenbart zur Überwindung dieser Nachteile einen gattungsgemäßen Messradsatz, auf dem ein Lichtwellenleiter mit mindestens einem darin untergebrachten optischen Dehnmessstreifen angeordnet ist. Der Lichtwellenleiter ist durch eine Öffnung des Radsatzlagers hindurch geführt und mit einem optischen Drehübertrager am Radsatzlagergehäuse verbunden, der seinerseits mit einer nicht-rotierenden Datenerfassungs- und -verarbeitungseinheit gekoppelt ist. Auf diese Weise ist eine optische Übertragung der am rotierenden Radsatz aufgenommenen Messsignale an die nicht-rotierende Auswertungseinheit möglich. Die Herstellung eines solchen Messradsatzes ist jedoch aufwändig und teuer. Zudem verhindert eine solche zur Herstellung der Durchführung des Lichtwellenleiters notwendige mechanische Bearbeitung eine Weiternutzung des Messradsatzes im regulären betrieblichen Einsatz nach Abschluss der Messungen.

Der Erfindung liegt daher die Aufgabe zugrunde, einen Messradsatz, umfassend zwei mittels einer Radsatzwelle verbundene Räder, mindestens einen Lichtwellenleiter mit jeweils mindestens einem in dessen Faserkern eingeschriebenen optischen Filter, wobei der mindestens eine Lichtwellenleiter zur Verlegung auf einer Oberfläche mindestens eines Rades oder der Radsatzwelle eingerichtet ist, sowie mindestens einer Lichtquelle zur Einkopplung eines Lichtsignals in den mindestens einen Lichtwellenleiter, bereitzustellen, der diesen Nachteil überwindet und kostengünstig herzustellen ist.

Erfindungsgemäß wird diese Aufgabe in Verbindung mit dem Oberbegriff des Patentanspruches 1 dadurch gelöst, dass der Messradsatz weiterhin mindestens eine zur Erfassung und Auswertung von in den Lichtwellenleiter eingekoppelten und durch den mindestens einen optischen Filter modifizierten Lichtsignalen eingerichtete Signalauswertungseinrichtung aufweist, welche als ein auf der Radsatzwelle oder an einem Rad des Messradsatzes angeordnetes Spektrometer ausgeführt ist. Auf diese Weise ist ein Messradsatz realisierbar, der es ermöglicht, die simultane Ausmessung des gesamten Wellenlängen-Spektrums der von den optischen Filtern reflektierten Lichtsignale anhand dessen Intensitäten zu einem diskreten Zeitpunkt durchzuführen. Auf diese Weise können die geometrischen Abmessungen sowie die Masse eines solchen optischen Spektrometers derart minimiert werden, dass sich hieraus keine negativen Auswirkungen auf die dynamischen Eigenschaften des sich bei bestimmungsgemäßen Gebrauch rotierenden Messradsatzes ergeben. Somit sind dessen Signalerzeugungseinrichtungen und Signalauswertungseinrichtungen in besonders einfacher Weise auf dem Messradsatz installierbar, ohne dass hierzu eine mechanische Bearbeitung an dessen Radsatzwelle oder an dessen Rädern erforderlich ist. Ebenso kann der Messradsatz nach Abschluss von dessen messtechnischer Verwendung durch einfaches Entfernen des Lichtwellenleiters zu einem herkömmlichen für den Betriebseinsatz geeigneten Radsatz zurück gebaut werden.

Hierzu sind die Signalerzeugungs- und Signalauswertungseinrichtung entweder an innenliegenden oder an außenliegenden Stellen des Messradsatzes angeordnet. Unter "innenliegenden Stellen des Messradsatzes" sind solche Anbringungsorte zu verstehen, die sich bei bestimmungsgemäßem Gebrauch des Messradsatzes auf einem Schienengleis im Bereich oberhalb des Gleises befinden (also z.B. auf der zur Radsatzwelle hin orientierten Innenseite eines Rades, an der Radsatzwelle etc....); hierzu analog sind unter "außenliegenden Stellen des Messradsatzes" solche Anbringungsorte zu verstehen, die sich bei bestimmungsgemäßem Gebrauch des Messradsatzes auf einem Schienengleis außerhalb des Gleisbereiches befinden (also z.B. auf den "nach Gleis-Außen" gerichteten Außenflächen eines Rades, am Radsatzlagergehäuse etc....). Als Signalerzeugungseinrichtung sind im Kontext dieser Erfindung die in den Faserkern eines Lichtwellenleiters eingeschriebenen optischen Filter zu verstehen, welche zur Modifikation eines in den Lichtwellenleiter eingekoppelten Lichtsignals in Abhängigkeit von den durch mechanische Belastung des Lichtwellenleiters beeinflussten geometrischen Abständen des Filters (z.B. Abstände der Gitter eines Interferenzfilters zueinander) ausgelegt sind.

Die Datenübertragung zwischen Signalerzeugungs- und Signalauswertungseinrichtung erfolgt auf optischem Weg ohne elektrische Signale. Der Lichtwellenleiter lässt sich in einfacher Weise derart auf der Oberfläche des messtechnisch zu prüfenden Bauteils (d.h. in aller Regel eines Rades) des Messradsatzes verlegen (beispielsweise mittels Klebetechnik), dass die Positionierungen der eingeschriebenen Filter entlang des Lichtwellenleiters mit den Messorten, an denen Messwerte sensorisch zu erfassen sind, übereinstimmen. Hierzu ist der Lichtwellenleiter an seinem ersten distalen Ende mit einem Anschluss versehen, der zur Verbindung mit der Signalauswertungseinheit ausgebildet ist. Hierfür sind handelsübliche Verbinder geeignet. Ferner ist der Lichtwellenleiter derart verlegt, dass dieser - ausgehend vom vorgenannten Anschluss an die Signalauswertungseinrichtung - einer sukzessiven Abfolge von Messorten folgt, wobei jeder in den Lichtwellenleiter eingeschriebene Filter an einem solchen Messort angebracht wird. Dies bedeutet also, dass der - ausgehend vom Verbindungsanschluss zur Signalauswertungseinrichtung - entlang der Längserstreckung des Lichtwellenleiters erste Filter an einem ersten Messort des Bauteils angebracht ist, der mit Zwischenabstand hierauf seriell folgende zweite Filter an einem zweiten Messort des Bauteils angebracht ist usw..... Im Ergebnis sind alle Messorte des messtechnisch zu prüfenden Bauteils mittels desselben Lichtwellenleiters miteinander verbunden.

In besonders bevorzugter Weise ist eine Mehrzahl von Lichtwellenleitern mit in den Faserkern eingeschriebenen optischen Filtern vorgesehen, welche mittels separater Anschlüsse mit derselben Signalauswertungseinrichtung verbindbar sind. Auf diese Weise kann die Gesamtmenge der messtechnisch zu erfassenden Messorte eines Messradsatzes in eine Mehrzahl von Segmenten untergliedert werden, wobei alle Messorte jedes Segments mittels eines gemeinsamen Lichtwellenleiters erfasst werden. Auf diese Weise kann jedes Segment unabhängig von den anderen Segmenten messtechnisch erfasst und analysiert werden. Auf diese Weise kann verhindert werden, dass es bei eventuellen im Betrieb des Messradsatzes auftretenden Beschädigungen an einem Lichtwellenleiter oder Signalerzeugungsmittel zu einem vollständigen Ausfall der gesamten Messtechnik kommt. Im Fall einer Reparatur müssen nur die von der Beschädigung betroffenen Lichtwellenleiter bzw. Signalerzeugungsmittel ausgetauscht werden. Dies erhöht die Zuverlässigkeit des erfindungsgemäßen Messradsatzes und ermöglicht eine flexiblere und einfacheren Konfiguration des Messradsatzes. Dies wird wirksam unterstützt durch ein Aufkleben des Lichtwellenleiters auf der Oberfläche des messtechnisch zu prüfenden Bauteils des Messradsatzes. Auf diese Weise können Lichtwellenleiter im Falle einer Beschädigung auf einfache Weise ausgetauscht sowie nicht benötigte Lichtwellenleiter beschädigungs- und rückstandsfrei vom Messradsatz entfernt werden.

Die Erfindung sieht in diesem Kontext ferner vor, dass in den Faserkern eines Lichtwellenleiters bis zu 40 optische Filter eingeschriebenen sind, wobei die einzelnen optischen Filter unterschiedliche Abstände zum jeweils benachbarten Filter aufweisen können. Auf dieser Weise sind die Lichtwellenleiter in einfacher Weise an unterschiedliche Geometrien des messtechnisch zu prüfenden Bauteils sowie die sich hieraus ergebenden unterschiedlichen Positionen der Messorte anpassbar. Auch dies verbessert die flexiblere und einfachere Konfiguration des Messradsatzes. Eine exakte Positionierung der in den Lichtwellenleiter eingeschriebenen optischen Filter an den zugewiesenen Messorten ist durch das temporäre Einkoppeln eines visuell für das Montagepersonal sichtbaren Lichtsignals während des Verlegevorgangs möglich. Auf diese Weise können beispielsweise durch Anwendung eines roten Dauer-Laserlichts im sichtbaren Wellenlängen-Bereich scharf abgegrenzte Leuchtpunkte an den Orten der optischen Filter erzeugt werden, was das manuelle Ausrichten des Lichtwellenleiters deutlich erleichtert.

In bevorzugter Weise sind die Filter als Interferenzfilter bzw. als Faser-Bragg-Gitter mit jeweils individuellem Filterbereich ausgeführt. Hierbei deckt jeder Filter einen eineindeutigen Wellenlängenbereich ab, der sich von den Filterbereichen der übrigen Filter desselben Lichtwellenleiters unterscheidet. Die Faser-Bragg-Gitter können in besonders einfacher Weise mittels einer Laserlichtquelle im UV-Spektrum (z.B. mit Licht der Wellenlänge λ = 248 nm) in die Glasfaser eingeschrieben werden. Im Ergebnis können die über den Lichtwellenleiter an die Signalauswertungseinrichtung übertragenen Signale spezifischen Filtern und damit auch zugleich den spezifischen Messorten bzw. Messstellen am Messradsatz zugeordnet werden. Ferner ist in bevorzugter Weise vorgesehen, dass die Lichtquelle zur Einkopplung von Licht in den Faserkern des Lichtwellenleiters in die Signalauswertungseinrichtung integriert ist. Somit erfolgt in der Signalauswertungseinrichtung sowohl die Einkopplung des Lichtsignals als auch die Auswertung der an den verschiedenen Interferenzfiltern reflektierten Lichtsignale mit jeweils unterschiedlichen Wellenlängen. Zu diesem Zweck umfasst die Signalauswertungseinrichtung ein Spektrometer zur Auswertung des von den Interferenzfiltern reflektierten Lichtes. Mittels der vorgenannten Clusterung der Wellenlängenbereiche des reflektierten Lichts sind die von den verschiedenen Interferenzfiltern reflektierten Signale unabhängig voneinander messtechnisch erfassbar und auswertbar. Somit werden aus dem in der Signalauswertungseinrichtung registrierten Lichtsignal die für jeden Filter spezifischen Dehnungsinformationen extrahiert. Da die Datenübertragung auf ausschließlich optischem Wege erfolgt, werden Beeinträchtigungen oder Verfälschungen von Datensignalen durch die elektrischen Felder von Fahrmotoren elektrisch angetriebener Schienenfahrzeuge wirkungsvoll vermieden. Zusätzlich sind die Lichtwellenleiter mit einer Silikonschicht abgedeckt, was deren Schutz vor mechanischen Beschädigungen verbessert.

Gemäß einer sinnvollen Ausgestaltung des erfinderischen Grundkonzepts weist der mindestens eine Lichtwellenleiter Sensoren zur Messung von Temperaturen auf. In bevorzugter Weise sind diese als zur Temperaturmessung eingerichtete Faser-Bragg-Gitter ausgeführt. Diese ermitteln die Temperatur über die Messung des sich bei thermischer Ausdehnung des Glasmaterials des Lichtwellenleiters verändernden Brechungsindexes des Gitters. Dies ermöglicht eine Kompensation der temperaturbedingten Einflüsse auf die Messergebnisse.

Die Erfindung sieht weiterhin vor, dass der Messradsatz eine mit der mindestens einen Signalauswertungseinrichtung zur Daten- und Energieübertragung verbundene Nahfeld-Telemetrie-Vorrichtung aufweist. Diese umfasst einen nicht-rotierenden Stator sowie eine Rotorantenne, die sowohl zur berührungslosen Übertragung der messtechnisch ermittelten Daten von der am Messradsatz installierten Signalauswertungseinrichtung an eine stationäre bzw. nicht-rotierende Einrichtung zur Weiterbearbeitung der Messdaten als auch in hierzu inverser Richtung zur berührungsloser Übertragung von Energie an die Datenerfassungseinheit eingerichtet ist.

Im Falle von als Laufradsätzen ausgeführten Messradsatzes kann beispielsweise das Radsatzlagergehäuse einen geeigneten Ort zur Installation des Stators ausbilden; im Fall von als Treibradsätzen ausgeführten Messradsätzen kann dies ein Getriebe- oder Motorgehäuse im Nahbereich des Radsatzes sein.

Die Rotorantenne und die Signalauswertungseinrichtung sind derart zueinander angeordnet, dass für die Verbindungsleitung zwischen beiden keine Bohrungen in den Messradsatz eingebracht werden müssen und kurze Verbindungswege zwischen dem Ort der Messwerterfassung (d.h. der Signalauswertungseinrichtung) und dem Ort der Messwertübertragung realisiert sind. Sofern der Lichtwellenleiter auf einer zur Radsatzwelle orientierten Innenseite eines Rades des Messradsatzes verlegt ist, sind deshalb die Rotorantenne und die Signalauswertungseinrichtung in bevorzugter Weise im zwischen den beiden Rädern des Messradsatzes befindlichen innenliegenden Bereich der Radsatzwelle angeordnet. Hierzu analog sind bei Verlegung des Lichtwellenleiters auf einer entgegengesetzten Außenseite eines Rades die Rotorantenne und die Signalauswertungseinrichtung in bevorzugter Weise auf einem zum Radsatzlager hin orientierten außenliegenden Teil der Radsatzwelle angeordnet.

Es ist in diesem Zusammenhang ferner vorteilhaft, nicht nur die Signalauswertungseinrichtung sondern auch die Rotorantenne unmittelbar auf der Oberfläche der Radsatzwelle anzubringen (an Stelle z.B. einer Unterbringung im Innern einer Radsatz-Hohlwelle). Somit kann auf Bohrungen, Eintiefungen etc. in der Radsatzwelle vollständig verzichtet werden, was die konstruktiven Festigkeitseigenschaften der Radsatzwelle erhält und deren spätere Weiterverwendung im operativen Einsatz von Eisenbahnfahrzeugen ermöglicht.

Sofern einzelne Komponenten der Nahfeld-Telemetrie-Vorrichtung derart ausgeführt sind, dass deren Anbringung am Messradsatz zu dynamischen Unwuchten beim Betrieb des Messradsatzes führen könnte (z.B. ein Messverstärker, der den Umfang der Radsatzwelle nicht vollständig umgreift), dann sind diese bezüglich ihrer Lage und Ausrichtung derart am Messradsatz anzuordnen, dass es zu einem Ausgleich mit der Masse der Signalauswertungseinrichtung kommt.

Die Erfindung erstreckt sich ferner auf ein Schienenfahrzeug mit einem gemäß der vorgenannten Merkmale ausgeführten Messradsatz.

Die vorliegende Erfindung wird nachfolgend anhand eines Ausführungsbeispiels und dazugehöriger Zeichnungen näher erläutert. Es zeigen
Figur 1: Rad eines Messradsatzes in Frontalansicht
Figur 2: Rad eines Messradsatzes in Seitenansicht
Figur 3: alternative Ausführungsform der Erfindung mit innenliegender Anordnung der Signalauswertungseinrichtung

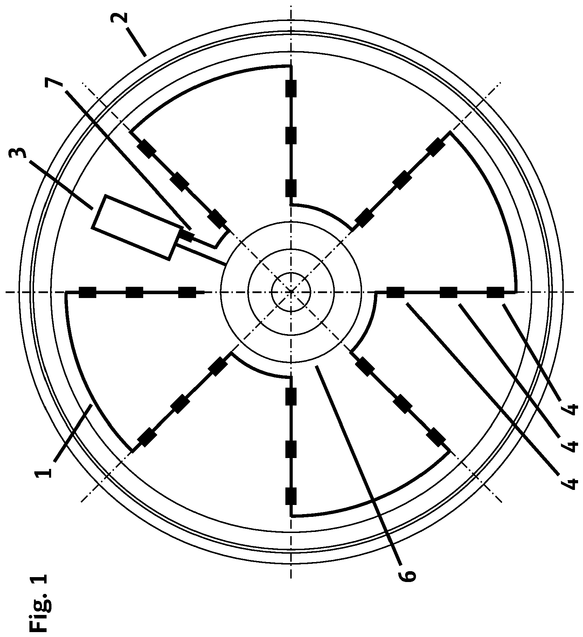

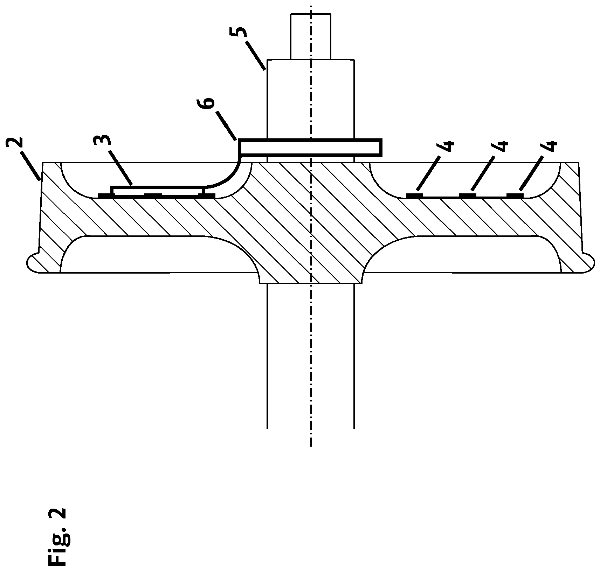

In Figuren 1 und 2 ist eine erste Ausführungsform eines erfindungsgemäßen Messradsatzes dargestellt, der in einem Schienenfahrzeug eingebaut ist und mittels dem die während des Betriebes des Schienenfahrzeuges auftretenden realen Kräfte und Belastungszustände zwischen Schienenfahrzeug und Schienengleisen messtechnisch ermittelt werden sollen. Auf der nach außen orientierten Seite der Radscheibe dieses Rades ist ein Lichtwellenleiter (1) verlegt, in dessen Faserkern 24 optische Interferenzfilter (4) in Form von Faser-Bragg-Gittern eingeschrieben sind. Der Lichtwellenleiter (1) ist mit Klebstoff auf der Radscheibe befestigt und mittels eines Anschlusses (7) an einer ebenfalls auf der Radscheibe aufgeklebten Signalauswertungseinrichtung (3) angeschlossen. Jedes Faser-Bragg-Gitter weist einen individuellen Filterbereich auf und einen individuellen Abstand zum Anschluss (7) auf. Der Lichtwellenleiter (1) kann somit derart auf der Radscheibe verlegt werden, dass an sämtlichen - für sich genommen aus dem Stand der Technik bekannten - Messtellen der Radscheibe jeweils ein Faser-Bragg-Gitter angeordnet ist. Hieraus ergibt sich die für diese messtechnische Anwendung charakteristische und in Figur 1 gut erkennbare "Kleeblatt"-förmige Anordnung des die einzelnen Messstellen verbindenden Lichtwellenleiters. Die Signalauswertungseinrichtung (3) verfügt über eine Lichtquelle, welche dazu eingerichtet ist, ein Lichtsignal in den Lichtwellenleiter einzukoppeln. Ferner verfügt die Signalauswertungseinrichtung (3) über Mittel zum Empfangen der von den Faser-Bragg-Gittern reflektierten Lichtsignale, wobei das von jedem Faser-Bragg-Gitter reflektierte Licht einem individuellen bzw. Gitter-spezifischen Wellenlängenspektrum zugeordnet ist. Auf diese Weise können die empfangenen Signale auf einfache Weise einem konkreten Interferenzfilter (4) bzw. Faser-Bragg-Gitter und damit auch einer konkreten Messstelle zugeordnet werden. Die Signalauswertungseinrichtung (3) ist mittels eines kurzen Verbindungskabels an eine Nahfeld-Telemetrie-Vorrichtung mit integrierter Rotorantenne (6) angeschlossen, welche auf der in Richtung zum Radsatzlager orientierten Außenseite der Radsatzwelle angeordnet ist und diese ringförmig umgreift. Mittels dieser Übertragungseinheit werden sowohl die Messwertsignale, die in der Signalauswertungseinrichtung (3) durch Auswertung der von den Interferenzfiltern (4) empfangenen Signale generiert wurden, über eine Luftschnittstelle auf induktivem Weg an eine stationäre Einrichtung zur Weiterbearbeitung der Messdaten (aus Gründen der besseren Übersichtlichkeit in den Figuren des Ausführungsbeispiels nicht dargestellt) übertragen, als auch in hierzu inverser Richtung Steuersignale zur Ansteuerung der Signalauswertungseinrichtung (3). Diese verfügt über eine räumlich auf die Rotorantenne hin ausgerichtete Statorantenne und ist im Bereich des Radsatzlagergehäuses oder des Drehgestellrahmens des Schienenfahrzeuges installiert. In der Auswertungseinheit erfolgt die Umrechnung der messtechnisch erfassten Dehnungsinformation in die hierzu korrespondierenden Kräfte. Sämtliche der Luftschnittstelle vorgelagerten Datenübertragungswege am Messradsatz sind als optische Übertragungswege ausgeführt, wodurch die elektromagnetische Verträglichkeit des Messradsatzes bzw. dessen Unempfindlichkeit gegenüber elektromagnetischen Störeinflüssen deutlich verbessert ist. Alternativ zur induktiven Datenübertragung wäre auch eine Übertragung mittels Funk möglich.

Über dieselbe Luftschnittstelle erfolgt auf ebenfalls induktivem Weg die Übertragung der zum Betrieb der Signalauswertungseinrichtung (3) sowie der Nahfeld-Telemetrie-Vorrichtung erforderlichen Energie. Für die Spannungsversorgung einer einzelnen Signalauswertungseinrichtung (3) mit 5 Volt ist die Bereitstellung einer konstanten elektrischen Leistung von 3 Watt erforderlich. Für den parallelen Betrieb einer Mehrzahl von Signalauswertungseinrichtungen ist eine entsprechend höhere Leistungsübertragung über die Luftschnittstelle erforderlich.

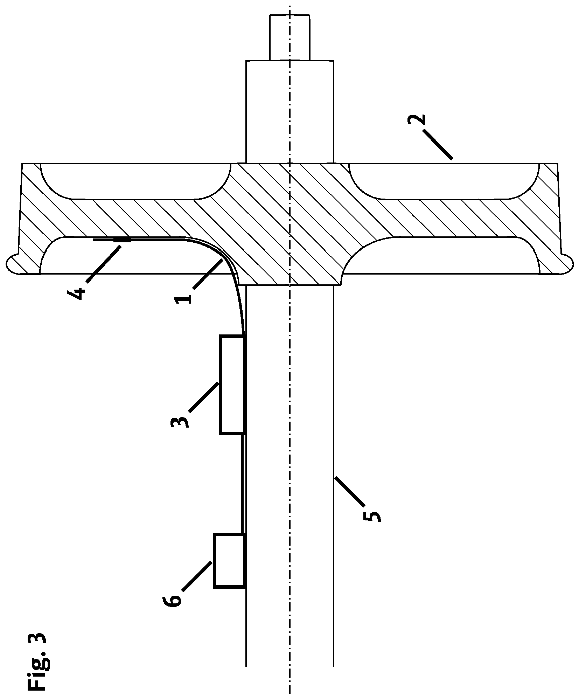

Figur 3 zeigt eine hierzu alternative zweite Ausführungsform der Erfindung mit innenliegender Anordnung der Signalauswertungseinrichtung (3) und der Interferenzfilter (4). Der Lichtwellenleiter (1) mit den in dessen Faserkern eingeschriebenen Interferenzfiltern (4) ist auf der zur Radsatzwelle (5) hin orientierten Innenseite des Rades (2) aufgebracht. Die Signalauswertungseinrichtung (3) ist auf der Außenfläche der Radsatzwelle in deren innenliegendem Bereich, d.h. zwischen den beiden Rädern des Messradsatzes, aufgeklebt.

### Bezugszeichenliste:

- 1: Lichtwellenleiter
- 2: Rad
- 3: Signalauswertungseinrichtung
- 4: Interferenzfilter
- 5: Radsatzwelle
- 6: Nahfeld-Telemetrie-Vorrichtung mit integrierter Rotorantenne
- 7: Anschluss

## Patentansprüche

1. Messradsatz, umfassend zwei mittels einer Radsatzwelle (5) verbundene Räder (2), mindestens einen Lichtwellenleiter (1) mit jeweils mindestens einem in dessen Faserkern eingeschriebenen optischen Filter (4), wobei der mindestens eine Lichtwellenleiter (1) zur Verlegung auf einer Oberfläche mindestens eines Rades oder der Radsatzwelle eingerichtet ist, sowie mindestens eine Lichtquelle zur Einkopplung eines Lichtsignals in den mindestens einen Lichtwellenleiter (1),
**dadurch gekennzeichnet, dass**
der Messradsatz weiterhin mindestens eine zur Erfassung und Auswertung von in den Lichtwellenleiter (1) eingekoppelten und durch den mindestens einen optischen Filter (4) modifizierten Lichtsignalen eingerichtete Signalauswertungseinrichtung (3) aufweist, die als ein auf der Radsatzwelle (5) oder an einem Rad (2) des Messradsatzes angeordnetes Spektrometer ausgeführt ist.

2. Messradsatz für Schienenfahrzeuge nach Patentanspruch 1, **dadurch gekennzeichnet, dass** der Messradsatz eine mit der mindestens einen Signalauswertungseinrichtung (3) zur Daten- und Energieübertragung verbundene Nahfeld-Telemetrie-Vorrichtung (6) aufweist.

3. Schienenfahrzeug mit einem Messradsatz nach einem der Patentansprüche 1 oder 2.

## Claims

1. Measuring wheel set, comprising two wheels (2) connected by means of a wheel set shaft (5), at least one optical waveguide (1) having respectively at least one optical filter (4) inscribed into its fibre core, wherein the at least one optical waveguide (1) is configured to be laid on a surface of at least one wheel or of the wheel set shaft, as well as at least one light source for coupling a light signal into the at least one optical waveguide (1),
**characterised in that**
the measuring wheel set furthermore has at least one signal evaluation apparatus (3), configured for the detection and evaluation of light signals which are coupled into the optical waveguide (1) and are modified by the at least one optical filter (4), which is in the form of a spectrometer arranged on the wheel set shaft (5) or at a wheel (2) of the measuring wheel set.

2. Measuring wheel set for rail vehicles according to claim 1, **characterised in that** the measuring wheel set has a near-field telemetry device (6) connected with the at least one signal evaluation apparatus (3) for the transmission of data and energy.

3. Rail vehicle having a measuring wheel set according to any of claims 1 or 2.

## Revendications

1. Cadre de mesure comprenant deux roues (2) reliées au moyen d'un arbre de jeu de roues (5), au moins une fibre optique (1) avec respectivement au moins un filtre (4) optique inscrit dans son noyau de fibre, dans lequel l'au moins une fibre optique (1) est conçue pour la pose sur une surface au moins d'une roue ou de l'arbre de jeu de roues, ainsi qu'au moins une source de lumière pour le couplage d'un signal de lumière dans l'au moins une fibre optique (1),
**caractérisé en ce que**
le cadre de mesure présente en outre au moins un appareil d'évaluation de signal (3) configuré pour la détection et l'analyse des signaux de lumière couplés dans la fibre optique (1) et modifiés par le au moins un filtre optique (4) qui est réalisé comme un spectromètre agencé sur l'arbre de jeu de roues (5) ou sur une roue (2) du cadre de mesure.

2. Cadre de mesure pour des véhicules sur rail selon la revendication 1, **caractérisé en ce que** le cadre de mesure présente un dispositif de télémétrie en champ proche (6) relié à l'au moins un appareil d'évaluation de signal (3) pour la transmission de données et d'énergie.

3. Véhicule sur rail avec un cadre de mesure selon l'une des revendications 1 ou 2.
